# EUROPÄISCHE PATENTSCHRIFT

(11) **EP 2 886 814 B1**
(45) Veröffentlichungstag und Bekanntmachung des Hinweises auf die Patenterteilung: **12.04.2017**
(21) Anmeldenummer: 14401112.9
(22) Anmeldetag: 04.12.2014
(51) Int. Cl.: F01M 13/04, B01D 45/14

(54) **Ölabscheider für die Reinigung von Entlüftungsgas sowie eine mit einem solchen Ölabscheider ausgestattete Brennkraftmaschine**
Oil separator for the purification of ventilation gas and combustion engine comprising such an oil separator
Séparateur d'huile pour le nettoyage de gaz d'aération et moteur à combustion interne doté d'un tel séparateur d'huile

(30) Priorität: 19.12.2013 DE 102013226610
(43) Veröffentlichungstag der Anmeldung: 24.06.2015
(73) Patentinhaber: Volkswagen AG, 38440 Wolfsburg (DE)
(72) Erfinder: Bröcker, Timm, 38442 Wolfsburg (DE)
(74) Vertreter: Scheffler, Jörg

(56) Entgegenhaltungen:
- EP-A1- 2 638 944
- DE-A1- 3 541 204
- DE-A1-102006 029 403
- JP-A- 2012 107 574
- JP-U- S5 625 009

## Beschreibung

Die Erfindung betrifft einen Ölabscheider für die Reinigung von Ölnebel als Aerosol enthaltendem Entlüftungsgas mit einem Einlass für das Entlüftungsgas, einem Auslass für das gereinigte Gas und einem Ölauslass, wobei der Ölabscheider mit zumindest einem rotationsbeweglich antreibbaren Ölabscheideelement ausgestattet ist, welches durch einen auf ein Antriebselement wirkenden Fluiddruck in Rotation versetzbar ist. Weiterhin betrifft die Erfindung eine mit einem solchen Ölabscheider ausgestattete Brennkraftmaschine.

Ein solcher Ölabscheider für die Kurbelgehäuseentlüftung einer Brennkraftmaschine ist typischerweise in einem stationären Gehäuse angeordnet und hat einen um eine Rotorachse drehantreibbaren Rotor. Der Rotor weist mehrere mit der Rotorachse konzentrisch, parallel zueinander beabstandet angeordnete Scheiben auf, die das Ölabscheideelement bilden. Zwischen dem Umfang des Rotors und einer diesen umschließenden Umfangswand des Gehäuses ist ein Ringraum eingeschlossen.

Derartige Ölabscheider für die Reinigung sogenannter Blowby-Gase, welche aus dem Kurbelgehäuse eines Hubkolben-Verbrennungsmotors abgeführt und nach der Reinigung in den Ansaugtrakt der Brennkraftmaschine eingeleitet werden, sind in Form sogenannter Tellerseparatoren bekannt.

Bei solchen Ölabscheidern haben die Scheiben die Gestalt kegelstumpfförmiger bzw. konischer Teller, welche in Richtung der Rotorachse so aufeinanderfolgen, dass jeweils die konkave Seite eines Tellers der konvexen Seite des benachbarten Tellers zugewandt ist.

Bei solchen Tellerseparatoren ergeben sich Zwischenräume bzw. Spalte zwischen den Tellern, die von dem zu reinigenden Gas in radialer Richtung von innen nach außen durchströmt werden. Im Betrieb des als Tellerseparator gestalteten Ölabscheiders wird das die Zwischenräume zwischen den Tellern durchströmende Gas durch die rotierenden Teller beschleunigt, wodurch die vom Gas mitgeführten Flüssigkeitströpfchen infolge der auf sie einwirkenden Zentrifugalkräfte auch in radialer Richtung beschleunigt werden und dadurch mehrheitlich auf die konkaven Seiten der kegelstumpfförmigen Teller auftreffen. Das dadurch an den Tellern abgeschiedene Öl wird von den rotierenden Tellern am Außenumfang des Tellers abgeschleudert und gelangt in den Ringraum zwischen dem Rotor und der diesen umschließenden Gehäuseumfangswand und sodann in den Olauslass.

Auch wenn das so gereinigte Gas nicht in die Umgebung abgeführt, sondern einem Ansaugtrakt der Brennkraftmaschine zugeführt wird, ist ein nennenswerter Öleintrag in den Ansaugtrakt dennoch zu vermeiden, da anderenfalls die Abgasemissionen erhöht werden sowie gegebenenfalls Ablagerungen am Turbolader und an einem Ladeluftkühler sowie an den Einlassventilen der Brennkraftmaschine gebildet werden und sich, bedingt durch die sich ändernden Verbrennungseigenschaften, die Funktion des im Abgasstrang des Motors befindlichen Partikelfilters verschlechtert.

Die DE 35 41 204 A1 bezieht sich auf einen Ölabscheider für die Kurbelgehäuseentlüftung einer Brennkraftmaschine. Das Schleuderrad wird vom Entlüftungsstrom angetrieben, benötigt also keinen eigenen Antrieb. Es kann aus sehr leichtem Material bestehen und so ausgebildet sein, dass es relativ hohe Drehzahlen erreichen kann, wobei die Drehzahl und damit der Ölabscheideeffekt in direktem Zusammenhang mit der Größe des Entlüftungsstromes steht. Hierzu ist das Schleuderrad in einem Ölauffanggehäuse oberhalb einer Eintrittsöffnung für den mit Öl vermischten Entlüftungsstrom angeordnet.

Die DE 44 44 344 C1 betrifft eine Freistrahlzentrifuge zur Abtrennung von Feststoffen aus einem Flüssigkeits-Feststoff-Gemisch, insbesondere Schmieröl einer Brennkraftmaschine, mit einem drehbar gelagerten Rotor mit Antriebsdüsen an seiner Unterseite. Ein den Rotor umgebendes Gehäuse ist im unteren Teil als Flüssigkeitssammelraum ausgebildet. Der Rotor ist an seinem Außenumfang oder an seiner Oberseite mit mindestens einer Verdichterschaufel versehen, mittels welcher im Betrieb der Zentrifuge bei Drehung des Rotors ein Luft- oder GasÜberdruck im Flüssigkeitssammelraum unterhalb des Rotors erzeugbar ist.

Die DE 10 2006 029 403 A1 bezieht sich auf einen hydraulisch angetriebenen Zentrifugal-Ölabscheider für Blowby-Gase einer Brennkraftmaschine, der einen Rotor aufweist, welcher mit einem hydraulischen Antriebselement gekoppelt ist. Das Antriebselement ist mit Fluid aus einer von einem Fluidkreis der Brennkraftmaschine abgezweigten Fluidleitung beaufschlagbar, in der ein Steuerventil zur Beeinflussung der Drehzahl des hydraulischen Antriebselementes integriert ist.

Die EP 2 638 944 A1 beschreibt bereits einen Ölabscheider für die Reinigung von Ölnebel, der mit zumindest einem rotationsbeweglich antreibbaren Ölabscheideelement ausgestattet ist, welches durch einen auf ein Antriebselement wirkenden Fluiddruck eines Fluidkreislaufes einer Brennkraftmaschine in Rotation versetzbar ist.

Die WO 01/36103 A1 offenbart eine Vorrichtung mit einem von einem externen Antriebsmotor antreibbaren Rotor mit konischen Scheiben. Der Rotor ist mit Führungselementen versehen, welche die Form von gebogenen Schaufeln haben können. Die Funktion dieser Führungselemente besteht darin, die auf den konischen Scheiben niedergeschlagene Flüssigkeit zu größeren Tropfen zu sammeln und dann in Form dieser größeren Tropfen abzuschleudern, um eine erneute Einmischung von Flüssigkeitströpfchen in den Gasstrom zu vermeiden.

Es ist auch bereits bekannt, zum Antrieb des Rotors die Nockenwelle oder Ausgleichswelle der Brennkraftmaschine zu nutzen, was allerdings die Gestaltungsfreiheit und die Anordnung des Abscheiders einschränkt.

Demgegenüber kann bei der WO 02/44530 A1 ein Antriebsfluid, insbesondere Druckluft, auf Turbinenblätter geführt werden, um den Rotor in Drehung zu versetzen. Im Normalbetrieb des Ölabscheiders kommt die für den Antrieb verwendete Druckluft von einem an der zugehörigen Brennkraftmaschine vorgesehenen Turbolader. In Betriebszuständen, in denen der Turbolader keine ausreichende Menge an Druckluft oder nur Druckluft mit einem ungenügenden Druck zur Verfügung stellt, kann über eine Ventilanordnung hilfsweise Druckluft aus einem Druckluftbehälter, der an einem zugehörigen Fahrzeug für eine Druckluft-Bremsanlage vorhanden ist, entnommen werden.

Bei der EP 1 464 797 B1 ist das rotierende Ölabscheideelement ohne Achsdurchführung gelagert und von einem außerhalb des Gehäuses angeordneten Antrieb berührungslos in Drehung versetzbar.

Ferner ist aus der EP 1 439 914 B1 eine Vorrichtung zum gleichzeitigen Reinigen einer Flüssigkeit von ersten darin befindlichen Schwebeteilchen und zum Reinigen eines Gases von zweiten darin befindlichen Schwebeteilchen bekannt. Die Vorrichtung hat einen Zentrifugenrotor, der um eine Drehachse drehbar ist und eine Trennkammer begrenzt, die von der Flüssigkeit durchströmt wird und diese reinigt. In der Trennkammer sind Trennscheiben angeordnet, die von der Flüssigkeit durchströmt werden. Jede der Trennscheiben der Gasreinigungsvorrichtung erstreckt sich axial in Bezug auf die Drehachse, sodass die Trennscheiben zwischen sich axial verlaufende Trenndurchgänge bilden, durch die das Gas hindurchströmt.

Als nachteilig erweist sich bei den aus dem Stand der Technik bekannten Ölabscheidern, die mit einem Fluidkreislauf gekoppelt sind, dass deren Wirkungsgrad vom Betriebsbereich der Brennkraftmaschine abhängig ist. Demgegenüber führen elektrisch angetriebene Ölabscheider zu einem zusätzlichen Energieverbrauch.

Vor diesem Hintergrund liegt der Erfindung die Aufgabe zugrunde, einen Ölabscheider der eingangs genannten Art derart auszuführen, dass der Wirkungsgrad in den verschiedenen Betriebsbereichen wesentlich verbessert ist, ohne dass hiermit ein wesentlicher Anstieg des Energieverbrauches verbunden ist.
Diese Aufgabe wird gelöst mit einem Ölabscheider gemäß den Merkmalen des Patentanspruches 1. Die Unteransprüche betreffen besonders zweckmäßige Weiterbildungen der Erfindung.

Erfindungsgemäß ist also ein Ölabscheider vorgesehen, bei dem das Ölabscheideelement in einem ersten Betriebsbereich, der insbesondere einem niedrigen Drehzahlbereich der Brennkraftmaschine zugeordnet ist, mittels der kinetischen Energie des zugeführten Entlüftungsgases antreibbar ist und in einem zweiten Betriebsbereich, der insbesondere einem hohen Drehzahlbereich der Brennkraftmaschine zugeordnet ist, mittels des Fluiddruckes eines Fluidkreislaufes der Brennkraftmaschine antreibbar ausgeführt ist. Indem in dem ersten Betriebsbereich der Brennkraftmaschine das ohnehin dem Ölabscheider zur Reinigung zugeführte Entlüftungsgas zugleich zum Antrieb des Ölabscheiders genutzt wird, kann dieser in diesem ersten Betriebsbereich ohne zusätzliche Energiezufuhr betrieben werden. Erst in dem zweiten, einer erhöhten Drehzahl oder Lastanforderung der Brennkraftmaschine entsprechenden Betriebsbereich wird der Ölabscheider zusätzlich, gegebenenfalls aber auch ausschließlich dadurch angetrieben, dass dieser mit einem Fluidkreislauf, vorzugsweise dem Schmiermittel- oder dem Kühlwasserkreislauf der Brennkraftmaschine verbunden, also in diesen Kreislauf eingebunden wird. Hiermit gehen in der Praxis kaum messbare Verluste einher, sodass der Ölabscheider ohne einen nennenswerten Energiemehrverbrauch der Brennkraftmaschine zuverlässig angetrieben werden kann. Zudem ist die Drehzahl des Ölabscheideelementes durch die bedarfsweise Zuschaltung des Fluiddruckes an die jeweiligen Betriebsbereiche der Brennkraftmaschine optimal anpassbar. Insbesondere hängt also die Drehzahl des Ölabscheideelementes nicht allein von dem Gasdruck des Entlüftungsgases ab. Der Erfindung liegt somit die Erkenntnis zugrunde, dass die Kombination einer beispielsweise permanenten Gaszufuhr des Entlüftungsgases und einer betriebsabhängigen Zufuhr einer weiteren Antriebsleistung in Form des Fluiddruckes des Fluidkreislaufes der Brennkraftmaschine einen einfach zu realisierenden und zu steuernden Antrieb des Ölabscheideelementes bei kaum nennenswertem Energieverbrauch ermöglicht.

Dabei hat es sich bereits als besonders vorteilhaft erwiesen, wenn der dem Antriebselement zuführbare, auf dieses einwirkende Fluiddruck des Fluides oder des Entlüftungsgases mittels eines Stellmittels, insbesondere Ventils einstellbar oder bedarfsweise zuschaltbar ist. Durch die entsprechende Schaltstellung des Ventils, beispielsweise ein Schieber oder ein Kugelhahn, wird das Ölabscheideelement in einfacher Weise mit einer zusätzlichen antreibenden Energie in Form eines gewünschten Volumenstromes des Fluides beaufschlagt. Dabei wirken das Entlüftungsgas und das Fluid vorzugsweise auf unterschiedliche Antriebsräder, um so eine stoffliche Trennung sicherzustellen.

Das Stellmittel könnte durch eine Steuerung betätigbar sein, die beispielsweise aufgrund der erfassten Betriebsparameter der Brennkraftmaschine ein Steuersignal auslöst. Weiterhin kann das Stellmittel aufgrund des Volumenstromes einen Durchlass zu dem Ölabscheideelement freigeben. Besonders vorteilhaft ist hingegen eine Abwandlung der Erfindung, bei welcher das Stellmittel als ein Ventil mit einem insbesondere einstellbaren Schaltdruck ausgeführt ist. Hierdurch wird aufgrund des Fluiddruckes in dem Fluidkreislauf bei Überschreiten eines Schaltdruckes, beispielsweise zwischen 1 und 3 bar, vorzugsweise bei etwa 1,5 bar Überdruck eine Durchlassöffnung freigegeben und so das Ölabscheideelement mit dem gewünschten Fluiddruck beaufschlagt. Das Stellglied des Ventils wird hierzu entgegen der Rückstellkraft eines Federelementes in die geöffnete Position verlagert.

Vorzugsweise ist die Drehzahl des Ölabscheideelementes in dem zweiten Betriebsbereich durch eine Steuerung des zugeführten Fluiddruckes steuerbar, sodass die Drehzahl nicht etwa von dem zugeführten Entlüftungsgas abhängt. Somit kann jederzeit eine für die gewünschte Ölabscheidung erforderliche Drehzahl sichergestellt werden.

Bei einer weiteren, ebenfalls besonders Erfolg versprechenden Ausgestaltung der vorliegenden Erfindung ist das durch das Fluid oder das Entlüftungsgas beaufschlagbare Antriebselement als ein Antriebsrad, insbesondere als ein Turbinenrad ausgeführt, um so die Strömung des Fluides oder des Entlüftungsgases effizient in die gewünschte Rotation umzusetzen.

Hierzu eignet sich eine Ausführungsform, bei der das Antriebsrad mit einer insbesondere schaufelförmigen Ausformung ausgestattet ist, wie diese beispielsweise in ähnlicher Form auch bei Ladern, beispielsweise Abgasturboladern der Brennkraftmaschine, als Turbinenrad zum Einsatz kommen. Selbstverständlich ist die Ausformung an das Entlüftungsgas einerseits und die Flüssigkeit andererseits hinsichtlich der Gestaltung entsprechend angepasst.

Das Antriebsrad könnte direkt oder einteilig mit dem Ölabscheideelement verbunden sein bzw. eine Ausformung auf der Oberfläche des Ölabscheideelementes aufweisen. Besonders vorteilhaft ist es hingegen, wenn das Antriebsrad mittels einer Welle mit dem Ölabscheideelement verbunden ist, sodass insbesondere hinsichtlich des von dem Fluid beaufschlagten Antriebsrades eine zuverlässige stoffliche Trennung erreicht und eine Mischung bzw. Verunreinigung des Entlüftungsgases durch Fluidbestandteile zuverlässig vermieden wird.

Weiterhin erweist es sich als besonders gewinnbringend, wenn das Fluid mittels einer Zuführdüse mit einer einstellbaren Düsenöffnung auf das Antriebsrad lenkbar ist. Durch die Zuführdüse wird beispielsweise eine Strahlformung des zugeführten Fluides und somit eine Erhöhung der Strömungsgeschwindigkeit erreicht, die optimal in die gewünschte Antriebsenergie des Antriebsrades umsetzbar ist. Zudem kann der zugeführte Strahl mittels der Zuführdüse auch in einer radialen Auftreffposition des Strahles auf dem Antriebsrad eingestellt werden, um so die gewünschte Drehzahl des Antriebsrades verändern zu können. Hierzu ist die Zuführdüse hinsichtlich der Position und/oder Orientierung in unterschiedlichen Positionen insbesondere stufenlos einstellbar.

Darüber hinaus kann der Ölabscheider gemäß einer weiteren besonders praxisgerechten Abwandlung mehrere Zuführdüsen aufweisen, die bedarfsweise zur Anpassung der erforderlichen Antriebsleistung für das Ölabscheideelement mit Fluid beaufschlagbar sind. Selbstverständlich könnte zumindest einzelnen Zuführdüsen jeweils ein separates Ventil, beispielsweise auch mit einem unterschiedlichen Schaltdruck zugeordnet sein, um so je nach Fluiddruck des Fluidkreislaufes die zweckmäßige Druckbeaufschlagung vornehmen zu können. In Bezug auf die Rotationsachse des Antriebsrades können mehrere Zuführdüsen einen unterschiedlichen radialen Abstand aufweisen.
Im Zusammenhang der Erfindung steht auch eine mit einem erfindungsgemäßen Ölabscheider ausgestattete Brennkraftmaschine. Diese erfindungsgemäße Brennkraftmaschine weist eine vorteilhaft verbesserte Energiebilanz auf.

Erfindungsgemäß ist in der erfindungsgemäßen Brennkraftmaschine der Ölabscheider für die Reinigung von mit Ölnebel kontaminiertem Entlüftungsgas aus dem Inneren der Brennkraftmaschine mit einem Einlass für das Entlüftungsgas, mit einem Auslass für das gereinigte Gas und mit einem Ölauslass ausgestattet, wobei der Ölabscheider zumindest ein rotationsbeweglich antreibbares Ölabscheideelement aufweist, das durch einen auf ein Antriebselement wirkenden Fluiddruck, nämlich in einem ersten Betriebsbereich mittels des zugeführten Entlüftungsgases und in einem zweiten Betriebsbereich der Brennkraftmaschine alternativ oder ergänzend mittels des Fluiddruckes eines Fluidkreislaufes der Brennkraftmaschine, in Rotation versetzbar ist. Hierdurch wird ein besonders einfacher Antrieb des Ölabscheideelementes ohne einen zusätzlichen elektrischen Antrieb realisiert, wobei der Ölabscheider dennoch in besonders effizienter Weise an die unterschiedlichen Betriebsbereiche der Brennkraftmaschine angepasst werden kann. Durch die effektive Reinigung des Entlüftungsgases von Ölnebel wird sichergestellt, dass kein oder nur ein sehr geringer Anteil von unerwünschten Ölrückständen zusammen mit der Gasrückführung in den Brennraum der Brennkraftmaschine gelangen kann und so das Risiko einer Verkokung und Vorentflammung erheblich reduziert ist.

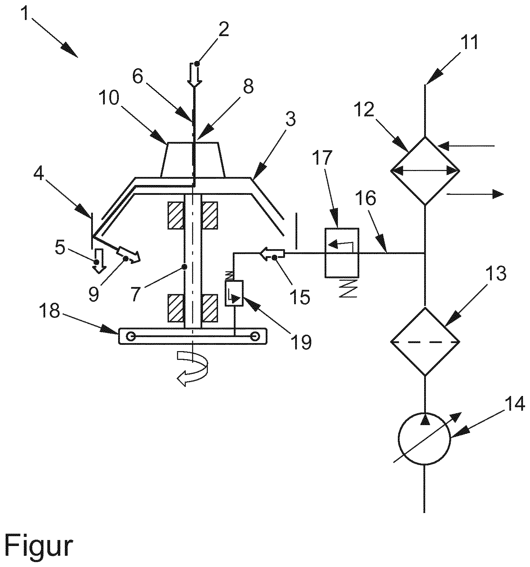

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in einer Prinzipdarstellung einen für eine nicht weiter dargestellte Brennkraftmaschine bestimmten Ölabscheider 1. Der Ölabscheider 1 dient der Reinigung eines Entlüftungsgases 2 aus dem Inneren der Brennkraftmaschine von schädlichen Ölrückständen, die als Ölnebel in dem Entlüftungsgas 2 enthalten sind. Um diese mitgeführten Ölrückstände wirksam von dem Entlüftungsgas 2 zu trennen, wird nach dem Prinzip eines Zentrifugalabscheiders das Entlüftungsgas 2 auf ein schnell rotierendes, tellerförmiges Ölabscheideelement 3 gelenkt. Das dort anhaftende Öl wird dann unter dem Einfluss der Zentrifugalkraft an einer das Ölabscheideelement 3 radial einschließenden Prallwand 4 abgeschieden und gelangt von dort in einen Ölauslass 5. Das kontaminierte Entlüftungsgas 2 wird hierzu dem Ölabscheideelement 3 parallel zu einer Rotationsachse 6 einer Welle 7 von oben durch einen Einlass 8 zugeführt und das gereinigte Gas durch einen Auslass 9 beispielsweise einer nicht gezeigten Abgasrückführleitung zugeführt. Die Besonderheit der Erfindung liegt nun in dem Antriebskonzept des Ölabscheideelementes 3, welches auf einer Anströmung durch ein Fluid beruht. Hierzu wird in einem ersten Betriebsbereich, welcher mit einem niedrigen Drehzahlbereich der Brennkraftmaschine einhergeht, das Ölabscheideelement 3 ausschließlich mittels der kinetischen Energie des zugeführten Entlüftungsgases 2 angetrieben, welches hierzu zunächst koaxial zu der Rotationsachse 6 zugeführt wird und dann auf ein als ein Antriebsrad ausgeführtes Antriebselement 10 mit einem nicht dargestellten, turbinenartigen Flügelprofil trifft. Auf diese Weise dient das zu reinigende Entlüftungsgas 2 selbst als Antrieb. Die dadurch erzielbare Drehzahl des Ölabscheideelementes 3 reicht bei höheren Drehzahlen der Brennkraftmaschine in einem zweiten Betriebsbereich nicht mehr aus. Daher wird in diesem Betriebsbereich zusätzlich aus einem einen Schmiermittelkreislauf bildenden Fluidkreislauf 11 zumindest umfassend einen Wärmetauscher 12, einen Filter 13 sowie eine Pumpe 14 ein Teilstrom 15 einem Abzweig 16 zugeführt, indem oberhalb eines definierten Fluiddruckes ein Stellmittel 17 in dem Abzweig 16 öffnet. Das Fluid trifft dann auf ein weiteres Antriebselement 18, welches mit dem Ölabscheideelement 3 mittels der Welle 7 verbunden ist, und wird anschließend zurück in den Fluidkreislauf 11 eingespeist. Auf diese Weise wird in dem zweiten Betriebsbereich eine wesentlich höhere Drehzahl erreicht. Zur Vermeidung unerwünscht hoher Drehzahlen bzw. einer Überlastung des Ölabscheiders 1 ist zusätzlich ein Bypassventil 19 vorgesehen, durch das ab Erreichen eines oberen Schaltdruckes zumindest ein Teilstrom des Fluides unter Umgehung des Antriebselementes 18 zurück in den Fluidkreislauf 11 geleitet wird. Auf diese Weise kann zugleich auch die Drehzahl des Ölabscheideelementes 3 in einfacher Weise geregelt werden.

### Bezugszeichenliste

- 1: Ölabscheider
- 2: Entlüftungsgas
- 3: Ölabscheideelement
- 4: Prallwand
- 5: Ölauslass

- 6: Rotationsachse
- 7: Welle
- 8: Einlass
- 9: Auslass
- 10: Antriebselement

- 11: Fluidkreislauf
- 12: Wärmetauscher
- 13: Filter
- 14: Pumpe
- 15: Teilstrom

- 16: Abzweig
- 17: Stellmittel
- 18: Antriebselement
- 19: Bypassventil

## Patentansprüche

1. Ölabscheider (1) für die Reinigung von Ölnebel enthaltendem Entlüftungsgas (2) mit einem Einlass (8) für das Entlüftungsgas (2), einem Auslass (9) für das gereinigte Gas und einem Ölauslass (5), wobei der Ölabscheider (1) mit zumindest einem rotationsbeweglich antreibbaren Ölabscheideelement (3) ausgestattet ist, welches durch einen auf ein Antriebselement (10, 18) wirkenden Fluiddruck in Rotation versetzbar ist, **dadurch gekennzeichnet, dass** das Ölabscheideelement (3) in einem ersten Betriebsbereich, insbesondere einem niedrigen Drehzahlbereich der Brennkraftmaschine, mittels des zugeführten Entlüftungsgases (2) antreibbar ist und in einem zweiten Betriebsbereich, insbesondere einem hohen Drehzahlbereich der Brennkraftmaschine, mittels des Fluiddruckes eines Fluidkreislaufes (11) einer Brennkraftmaschine antreibbar ausgeführt ist.

2. Ölabscheider (1) nach Anspruch 1, **dadurch gekennzeichnet, dass** der dem Antriebselement (10, 18) zuführbare Fluiddruck mittels eines Stellmittels (17), insbesondere Ventils, einstellbar und/oder bedarfsweise zuschaltbar ist.

3. Ölabscheider (1) nach den Ansprüchen 1 oder 2, **dadurch gekennzeichnet, dass** das Stellmittel (17) als ein Ventil mit einem insbesondere einstellbaren Schaltdruck ausgeführt ist.

4. Ölabscheider (1) nach zumindest einem der vorangehenden Ansprüche, **dadurch gekennzeichnet, dass** die Drehzahl des Ölabscheideelementes (3) in dem zweiten Betriebsbereich durch eine Steuerung des zugeführten Fluiddruckes veränderbar ist.

5. Ölabscheider (1) nach zumindest einem der vorangehenden Ansprüche, **dadurch gekennzeichnet, dass** das durch das Fluid oder das Entlüftungsgas (2) beaufschlagbare Antriebselement (10) als ein Antriebsrad, insbesondere als ein Turbinenrad ausgeführt ist.

6. Ölabscheider (1) nach zumindest einem der vorangehenden Ansprüche, **dadurch gekennzeichnet, dass** das Antriebselement (10, 18) mit einer insbesondere schaufel- oder flügelförmigen Ausformung ausgestattet ist.

7. Ölabscheider (1) nach zumindest einem der vorangehenden Ansprüche, **dadurch gekennzeichnet, dass** das Antriebselement (18) mittels einer Welle (7) mit dem Ölabscheideelement (3) verbunden ist.

8. Ölabscheider (1) nach zumindest einem der vorangehenden Ansprüche, **dadurch gekennzeichnet, dass** das Fluid mittels einer Zuführdüse mit einer einstellbaren Düsenöffnung auf das Antriebselement (10, 18) lenkbar ist.

9. Ölabscheider (1) nach zumindest einem der vorangehenden Ansprüche, **dadurch gekennzeichnet, dass** der Ölabscheider (1) mehrere Zuführdüsen aufweist, die bedarfsweise zur Anpassung der Antriebsleistung mit Fluid beaufschlagbar sind.

10. Eine mit einem Ölabscheider (1) nach zumindest einem der vorangehenden Ansprüche ausgestattete Brennkraftmaschine, wobei der Ölabscheider (1) für die Reinigung von mit Ölnebel kontaminiertem Entlüftungsgas (2) aus dem Inneren der Brennkraftmaschine mit einem Einlass (8) für das Entlüftungsgas (2), mit einem Auslass (9) für das gereinigte Gas, mit einem Ölauslass (5) und mit zumindest einem rotationsbeweglich antreibbaren Ölabscheideelement (3), das durch einen auf ein Antriebselement (10, 18) wirkenden Fluiddruck, nämlich in einem ersten Betriebsbereich der Brennkraftmaschine ein Fluiddruck des zugeführten Entlüftungsgases (2) und in einem zweiten Betriebsbereich der Brennkraftmaschine alternativ oder ergänzend durch einen Fluiddruck eines Fluidkreislaufes (11) der Brennkraftmaschine in Rotation versetzbar ist.

## Claims

1. Oil separator (1) for cleaning venting gas (2) which contains oil mist, having an inlet (8) for the venting gas (2), an outlet (9) for the cleaned gas and an oil outlet (5), the oil separator (1) being provided with at least one oil separation element (3) which can be driven in a rotationally movable manner and can be set in rotation by way of a fluid pressure which acts on a drive element (10, 18), **characterized in that** the oil separation element (3) is configured such that it can be driven by means of the supplied venting gas (2) in a first operating range, in particular a low rotational speed range of the internal combustion engine, and is configured such that it can be driven by means of the fluid pressure of a fluid circuit (11) of an internal combustion engine in a second operating range, in particular a high rotational speed range of the internal combustion engine.

2. Oil separator (1) according to Claim 1, **characterized in that** the fluid pressure which can be fed to the drive element (10, 18) can be set and/or can be switched on if required by means of an actuating means (17), in particular a valve.

3. Oil separator (1) according to Claim 1 or 2, **characterized in that** the actuating means (17) is configured as a valve with an, in particular, adjustable switching pressure.

4. Oil separator (1) according to at least one of the preceding claims, **characterized in that** the rotational speed of the oil separation element (3) can be varied in the second operating range by way of a control operation of the supplied fluid pressure.

5. Oil separator (1) according to at least one of the preceding claims, **characterized in that** the drive element (10) which can be loaded by the fluid or the venting gas (2) is configured as a drive wheel, in particular as a turbine wheel.

6. Oil separator (1) according to at least one of the preceding claims, **characterized in that** the drive element (10, 18) is equipped with a shaped-out moulding which is, in particular, blade-shaped or vane-shaped.

7. Oil separator (1) according to at least one of the preceding claims, **characterized in that** the drive element (18) is connected to the oil separation element (3) by means of a shaft (7).

8. Oil separator (1) according to at least one of the preceding claims, **characterized in that** the fluid can be directed onto the drive element (10, 18) by means of a feed nozzle with an adjustable nozzle opening.

9. Oil separator (1) according to at least one of the preceding claims, **characterized in that** the oil separator (1) has a plurality of feed nozzles which can be loaded with fluid as required in order to adapt the drive power.

10. Internal combustion engine which is equipped with an oil separator (1) according to at least one of the preceding claims, the oil separator (1) for cleaning venting gas (2) which is contaminated with oil mist from the interior of the internal combustion engine having an inlet (8) for the venting gas (2), having an outlet (9) for the cleaned gas, having an oil outlet (5) and having at least one oil separation element (3) which can be driven in a rotationally movable manner, which oil separation element (3) can be set in rotation by a fluid pressure which acts on a drive element (10, 18), namely a fluid pressure of the supplied venting gas (2) in a first operating range of the internal combustion engine and, as an alternative or in addition, by a fluid pressure of a fluid circuit (11) of the internal combustion engine in a second operating range of the internal combustion engine.

## Revendications

1. Séparateur d'huile (1) pour la purification de gaz de désaérage (2) contenant un brouillard d'huile, comprenant une entrée (8) pour le gaz de désaérage (2), une sortie (9) pour le gaz purifié et une sortie d'huile (5), le séparateur d'huile (1) étant muni d'au moins un élément de séparation d'huile (3) pouvant être entraîné en rotation, qui peut être mis en rotation par une pression de fluide agissant sur un élément d'entraînement (10, 18), **caractérisé en ce que** l'élément de séparation d'huile (3), dans une première plage de fonctionnement, en particulier une plage de faible régime du moteur à combustion interne, peut être entraîné au moyen du gaz de désaérage acheminé (2), et dans une deuxième plage de fonctionnement, en particulier une plage de haut régime du moteur à combustion interne, est réalisé de manière à pouvoir être entraîné au moyen de la pression de fluide d'un circuit de fluide (11) d'un moteur à combustion interne.

2. Séparateur d'huile (1) selon la revendication 1, **caractérisé en ce que** la pression de fluide pouvant être acheminée à l'élément d'entraînement (10, 18) peut être ajustée et/ou commutée au besoin au moyen d'un actionneur (17), en particulier d'une soupape.

3. Séparateur d'huile (1) selon les revendications 1 ou 2, **caractérisé en ce que** l'actionneur (17) est réalisé sous la forme d'une soupape avec une pression de commutation notamment ajustable.

4. Séparateur d'huile (1) selon au moins l'une quelconque des revendications précédentes, **caractérisé en ce que** la vitesse de rotation de l'élément de séparation d'huile (3) dans la deuxième plage de fonctionnement peut être modifiée par une commande de la pression de fluide acheminée.

5. Séparateur d'huile (1) selon au moins l'une quelconque des revendications précédentes, **caractérisé en ce que** l'élément d'entraînement (10) pouvant être sollicité par le fluide ou par le gaz de désaérage (2) est réalisé sous forme de roue d'entraînement, en particulier sous forme de roue de turbine.

6. Séparateur d'huile (1) selon au moins l'une quelconque des revendications précédentes, **caractérisé en ce que** l'élément d'entraînement (10, 18) est pourvu d'une configuration notamment en forme de pale ou d'aile.

7. Séparateur d'huile (1) selon au moins l'une quelconque des revendications précédentes, **caractérisé en ce que** l'élément d'entraînement (18) est connecté à l'élément de séparation d'huile (3) au moyen d'un arbre (7).

8. Séparateur d'huile (1) selon au moins l'une quelconque des revendications précédentes, **caractérisé en ce que** le fluide peut être dirigé vers l'élément d'entraînement (10, 18) au moyen d'une buse d'alimentation avec une ouverture de buse ajustable.

9. Séparateur d'huile (1) selon au moins l'une quelconque des revendications précédentes, **caractérisé en ce que** le séparateur d'huile (1) présente plusieurs buses d'alimentation qui, au besoin, peuvent être sollicitées avec du fluide pour l'adaptation de la puissance d'entraînement.

10. Moteur à combustion interne muni d'un séparateur d'huile (1) selon au moins l'une quelconque des revendications précédentes, le séparateur d'huile (1) pour la purification des gaz de désaérage (2) contaminés par un brouillard d'huile provenant de l'intérieur du moteur à combustion interne, comprenant une entrée (8) pour le gaz de désaérage (2), une sortie (9) pour le gaz purifié, une sortie d'huile (5) et au moins un élément de séparation d'huile (3) pouvant être entraîné en rotation, qui peut être mis en rotation par une pression de fluide agissant sur un élément d'entraînement (10, 18), à savoir dans une première plage de fonctionnement du moteur à combustion interne, une pression de fluide du gaz de désaérage acheminé (2), et dans une deuxième plage de fonctionnement du moteur à combustion interne, en variante ou en plus, par une pression de fluide d'un circuit de fluide (11) du moteur à combustion interne.
